(19) Europäisches Patentamt

European Patent Office

Office européen des brevets

(11) Veröffentlichungsnummer: **0 185 877**
**B1**

(12) **EUROPÄISCHE PATENTSCHRIFT**

(45) Veröffentlichungstag der Patentschrift: **18.04.90**

(21) Anmeldenummer: **85113390.0**

(22) Anmeldetag: **22.10.85**

(51) Int. Cl.⁵: **F 41 J 2/02, F 41 J 1/08**

(54) Zieleinrichtung für Infrarot-Schiessübungen.

(30) Priorität: **30.10.84 DE 3439689**
**17.04.85 DE 3513906**
**07.05.85 DE 3516392**

(43) Veröffentlichungstag der Anmeldung:
**02.07.86 Patentblatt 86/27**

(45) Bekanntmachung des Hinweises auf die
Patenterteilung:
**18.04.90 Patentblatt 90/16**

(84) Benannte Vertragsstaaten:
**AT BE CH DE FR GB IT LI LU NL SE**

(56) Entgegenhaltungen:
**DE-A-3 006 462**
**DE-A-3 205 599**
**US-A-4 422 646**

(73) Patentinhaber: **Geuss, Carlheinz**
**Thumbachstrasse 67**
**D-8484 Grafenwöhr (DE)**

(72) Erfinder: **Geuss, Carlheinz**
**Thumbachstrasse 67**
**D-8484 Grafenwöhr (DE)**

(74) Vertreter: **Gauger, Hans-Peter, Dipl.-Ing. et al**
**Patentanwälte Dipl.-Ing.Hans-Jürgen Müller**
**Dipl.-Chem.Dr.Gerhard Schupfner Dipl.-**
**Ing.Hans-Peter Gauger Postfach 80 13 69 Lucile-**
**Grahn-Strasse 38**
**D-8000 München 80 (DE)**

EP 0 185 877 B1

**Beschreibung**

Die Erfindung bezieht sich gemäß dem Oberbegriff des Anspruches 1 auf eine Zieleinrichtung für Infrarot-Schießübungen, die mit eine Wärmestrahlung vermittelnden Zielflächen gebildet ist.

Zieleinrichtungen dieser Art werden bei der nächtlichen Absolvierung eines militärischen Trainingsprogramms eingesetzt. Die von den Zielflächen vermittelte Wärmestrahlung simuliert beispielsweise ein den Konturen eines Panzers entsprechendes Scheinziel, das für die Dauer seines Beschusses eine gegenüber der Umgebungstemperatur um wenigstens etwa 1°C höhere Temperatur aufweisen muß, damit es mit den zur Vewrendung kommenen Nachtsicht-Visieren thermisch erfaßbar und innerhalb seiner Konturen auch beschußgerecht erkennbar ist. Das Scheinziel sollte für eine längere Zeitdauer erhalten bleiben, damit es mehrfach beschossen werden kann und somit die Zielflächen auch nicht zu häufig ausgewechselt werden müssen. Das Auswechseln der Zielflächen, die für das Scheinziel eines Panzers nach den einschlägigen NATO-Bestimmungen die Abmessungen von etwa 1.80 m×2.30 m aufweisen müssen, wird an einer zu ihrem Festhalten vorgesehenen Spannvorrichtung vorgenommen, die mit zwei nach Art eines Schraubestockes gegeneinander verstellbaren Spannbacken gebildet ist. Die Spannvorrichtung ist entweder an einer Schwenkvorrichtung angeordnet, mit welcher die Zielflächen aus einer horizontalen in eine vertikale Lage eingeschwenkt werden, oder sie ist an einem verfahrbaren Transportwagen angeordnet, wobei dann gegebenenfalls unter Verzicht auf eine besondere Schwenkvorrichtung die Zielflächen bereits in einer vertikalen Lage in die Beschußrichtung gebracht werden.

Aus der DE—A—32 05 599 ist eine Zielfläche bekannt, bei welcher die ein thermisches Scheinziel ergebende Wärmestrahlung mittels eines beispielsweise auf einer Hartfaserplatte angeordneten Kohlenstoff- oder Graphitfilzes als einem sich bei einem Stromdurchfluß erwärmenden und dafür an einem elektrischen Heizkreis anschließbaren Widerstandsmaterial erzeugt wird. Der elektrische Heizkreis ist dabei in Abhängigkeit von der Plattengröße entweder mit zwei in Reihe geschalteten 12 Volt-Batterien oder mit 220 Volt-Netzstrom gebildet und wird an den Filz mittels zweier randseitig vorgesehener Stromleisten angeschlossen. Durch die Anbringung einer Materialschicht mit einem unterschiedlichen elektrischen Widerstand und/oder mit einem unterschiedlichen Emissionsfaktor ist eine Veränderung der Wärmestrahlung für die Vorgabe von unterschiedlichen Konturen der Scheinziele vorgesehen. Die Zielflächen dieser Ausbildung eignen sich im wesentlichen nur für eine bloße Observierungsmöglichkeit von thermischen Scheinzielen, weil es damit für eine Beobachtung auch aus größerer Entfernung ohne weiteres möglich ist, Zieltemperaturen bis etwa 3000°C zu simulieren. Für die Absolvierung von Infrarot-Schießübungen sind diese Zielflächen jedoch weniger geeignet, weil sie bei den größeren Abmessungen, eine zu lange Aufheizzeit und damit einen entsprechend hohen Energiebedarf benötigen, der gleichzeitig in einem ungünstigen Verhältnis zu dem Nutzungswert dieser Zielflächen steht. Es ist damit nämlich kaum möglich, ein Scheinziel mit einer völlig vergleichmäßigten Wärmestrahlung über eine Zeitdauer unverändert aufrecht zu erhalten, die einen mehrfachen Beschuß der Zielfläche erlaubt, weil schon wenige Trefferschüsse ausreichen können, den Stromfluß durch den Filz zusammenbrechen zu lassen und damit die gegenüber der Umgebungstemperatur höhere Wärmestrahlung augenblicklich zu beseitigen.

Aus der DE—A—30 06 462 ist eine Zielfläche bekannt, die mit einem an einem Holzrahmen befestigten flexiblen Stoff gebildet ist. Der flexible Stoff besteht aus einer Aluminiumfolie, die eine wärmeabsorbierende Schicht bildet, und einer Kunststoffolie, die eine für die Heizstrahlen eines Infrarot-Strahlers oder eines anderen Bestrahlungsgerätes durchlässige Schutzschicht bildet und mit der Aluminiumfolie über ein zur Ausbildung von ebenfalls wärmeabsorbierenden Luftkammern vorgesehenes grobmaschiges Netz verbunden ist. Die Zielflächen dieser Ausbildung ergeben ein verbessertes Wärmespeichervermögen und sind damit auch für eine mehrfache Beschußmöglichkeit geeignet. Bei größeren Abmessungen müssen jedoch die Zielflächen gleichzeitig mit mehreren Bestrahlungsgeräten aufgeheizt werden, was entsprechend höhere Betriebskosten ergibt und die Bereitstellung einer gleichmäßigen Wärmestrahlung erschwert.

Der Erfindung liegt die Aufgabe, zugrunde, eine Zieleinrichtung für Infrarot-Schießübungen bereit zu stellen, bei welcher die ein thermisches Scheinziel ergebende Wärmestrahlung von Zielflächen durch eine elektrische Heizvorrichtung erzeugt wird, die auch bei größeren Abmessungen der Zielflächen nur eine relativ kleine Heizleistung benötigt und dabei gleichzeitig ein Wärmespeichervermögen ergibt, das mit einer relativ kurzen Aufheizzeit erhalten und über eine verlängerte Zeitdauer vergleichmäßigt gegenüber der Umgebungstemperatur aufrecht erhalten werden kann, so daß damit diese Zielflächen ohne eine wesentliche Veränderung des von ihnen vermittelten Scheinzieles für eine größere Folge von einzelnen Beschüssen benutzt werden können, bevor sie bei Vorgabe auch einer möglichst einfachen Handhabung für die Absolvierung einer neuen Beschußfolge ein Auswechseln an der Spannvorrichtung erfahren.

Die erfindungsgemäße Zieleinrichtung ist zur Lösung dieser Aufgabe mit Zielflächen gebildet, bei denen jeweils eine Heizvorrichtung mit einer bevorzugt auf eine Sperrholzplatte oder eine Schichtstoffplatte bzw. eine Holzspanplatte aufgebrachten dünnen Metallschicht besteht, die in wenigstens zwei elektrisch parallel oder hintereinander geschlatete Teilflächen unterteilt ist, welche für eine gemeinsame Erwärmung an den beiden Spannbacken einer für ihr randseitiges Einspannen vorgesehenen Spannvorrichtung mit zwei Stromschienen eines elektrischen Heizkreises kontaktierbar sind, dessen Lieferspannung eine mittels eines Transformators abwärts transformierte Netzspannung oder eine Batteriespannung ist. Die Metallschicht kann dabei entweder durch einen auf das plattenförmige Trägermaterial auflaminierte Aluminiumfolie gebildet oder auf das Trägermaterial nach Art einer gedruckten Schaltung aufgebracht und ausgebildet sein, wobei sich die Auswahl hauptsächlich nach der größenmäßigen Vorgabe und der individuellen Ausgestaltung des jeweils gewünschten Scheinzieles richtet.

Die Zielflächen dieser Ausbildung ergeben für beide Varianten eine kostensparende Fertigungsmöglichkeit. Weil für die Metallschicht eine stromleitende Kontaktierung an den Spannbacken der Spannvorrichtung vorgesehen ist, kann damit die gemeinsame Erwärmung ihrer beiden Teilflächen über die Zeitdauer einer beliebig großen Beschußfolge unter Vorgabe eines Temperaturwertes für die Wärmestrahlung aufrecht erhalten werden, die auch bei größeren Abmessungen der Zielflächen ein unverändert gleichmäßiges Erkennen des mit dieser Wärmestrahlung vermittelten Scheinzieles erlaubt. Die Zielflächen sind dabei auch bei Vorgabe größerer Abmessungen gewichtsmäßig leicht zu handhaben, wenn für die Spannbacken der Spannvorrichtung einen gekrümmten Verlauf der Klemmflächen aufweisen, weil sie dann unter Vermeidung eines besonderen Aussteifungsgerüstes noch relativ dünn ausgebildet werden können. Mit solchen gekrümmten Klemmflächen ist nämlich eine Verspannung erreichbar, welche die Zielflächen hin zu ihren nicht eingespannten Rändern eine Vergleichmäßigung der Krümmung einnehmen läßt.

Ein Ausführungsbeispiel der erfindungsgemäßen Zieleinrichtung ist in der Zeichnung schematisch dargestellt und wird nachfolgend näher erläutert. Es zeigt

Fig 1 eine Draufsicht auf eine Spannvorrichtung, die zum Einspannen von größeren Zielflächen der Zieleinrichtung mit gekrümmten Klemmflächen ihrer beiden Spannbacken versehen ist,

Fig. 2 eine Schnittansicht der Spannvorrichtung in vergrößertem Maßstab nach der Linie II—II in Fig. 1

Fig. 3 eine Draufsicht in Richtung des Pfeiles A der in Fig. 2 gezeigten Knebelgriffanordnung,

Fig. 4 eine Schemadarstellung der gesamten Zieleinrichtung,

Fig. 5 eine Schemadatstellung einer Zielfläche in Draufischt und des an ihre Heizvorrichtung angeschlossenen Heizkreises gemäß einer ersten Ausführungsform,

Fig. 6 eine Schnittansicht der Zielfläche gemäß Fig. 5 und

Fig. 7 eine Schnittansicht der Zielfläche gemäß einer zweiten Ausführungsform.

Für Infrarot-Schießübungen eines mit Nachtsicht-Visieren in der Dunkelheit zu absolvierenden militärischen Trainingsprogramms werden Zielflächen verwendet, die mit einer gegenüber der Umgebungstemperatur um wenigstens 1°C höheren Wärmestrahlung ein thermisches Scheinziel ergeben. Die Zielflächen müssen senkrecht zu ihrer Beschußrichtung angeordnet werden, wofür sie am Beschußort mittels einer Schwenkvorrichtung aus einer horizontalen in eine vertikale Anordnung eingeschwenkt oder mittels eines Transportwagens in einer bereits eingenommenen vertikalen Anordnung an den Beschußort verfahren werden.

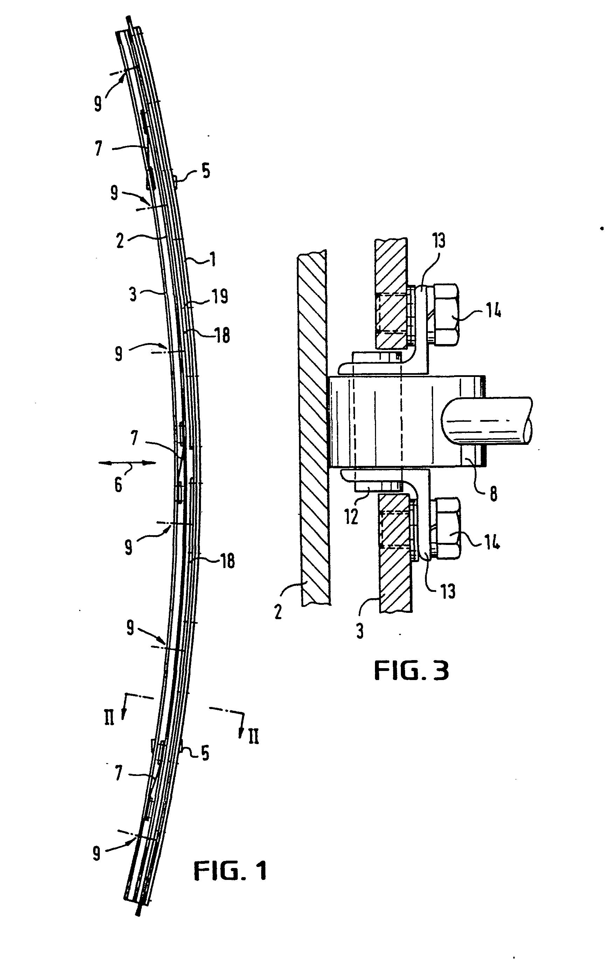

Die in den Figuren 1 bis 3 gezeigte Spannvorrichtung ist zum Festhlaten von Zielflächen der Abmessungen bspw. von 1.80 m×2.30 m konzipiert, womit nach einschlägigen NATO-Bestimmungen ein thermisches Scheinziel von Panzern simuliert wird. Die Spannvorrichtung ist mit zwei gegeneinander verstellbaren Spannbacken 1, 2 gebildet. Die eine Spannbacke 1 ist gemeinsam mit einer parallel angeordneten Stützbacke 3 an einer durch ein Hohlprofil gebildeten Stützkonsole 4 angeschweißt. Die Stützkonsole 4 ist mit zwei angeschweißten Rohren 5 nahe ihrer beiden Enden versehen, um damit die Spannvorrichtung an einem Transportwagen oder an einer Schwenkvorrichtung befestigen zu können.

Die beiden Spannbacken 1, 2 und die Stützbacke 3 weisen eine übereinstimmende Länge und eine übereinstimmende Kontur auf. Für eine gegen die Spannbacke 1 in Richtung des Doppelpfeils 6 verstellbare Anordnung ist die weniger breit ausgebildete Spannbacke 2 über drei angeschweißte oder angeschraubte Blattfedern 7 mit der Stützbacke 3 verbunden. Die Blattfedern 7 sind über ihre wechselseitige Befestigung derart vorgespannt, daß die Spannbacke 2 eine Spreizstellung bezüglich der Spannbacke 1 erfährt und somit die Spannbacke 2 gegen diese Vorspannkraft aller Blattfedern 7 in eine Einspannstellung der beiden Spannbacken 1, 2 bewegt werden muß.

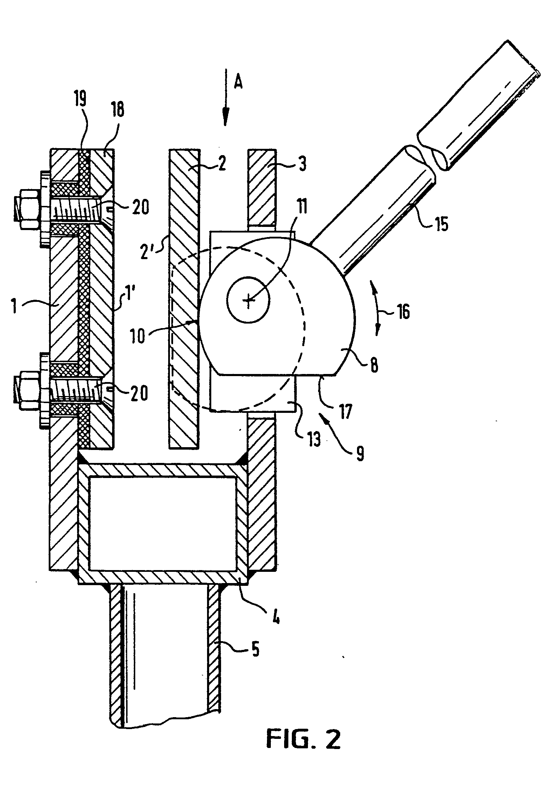

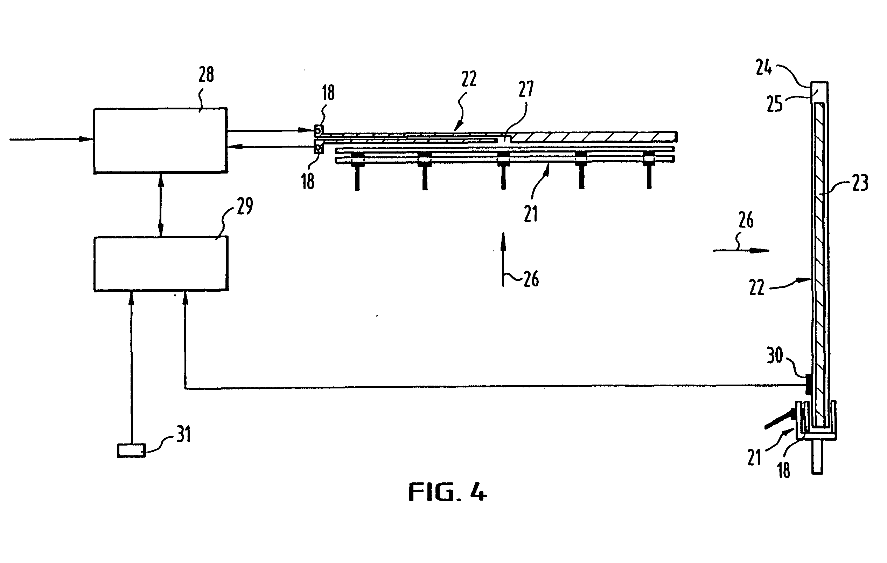

Durch die Blattfedern 7 wird die Spannbacke 2 gleichzeitig in eine ständige Berührungsstellung mit je einem Drehteil 8 von mehreren Knebelgriffanordnungen 9 vorgespannt, die längs der Stützbacke 3 gleichmäßig beabstandet vorgesehen sind. In der in Fig. 2 dargestellten Spreizstellung der beiden Spannbacken 1, 2 weist die Spannback 2 mit jedem Drehteil 8 eine Linienberührung 10 auf, die in einer tiefer gelegten Horizontalebene als eine exzentrisch ausgebildete Lagerachse 11 des Drehteils vorhanden ist. Die Lagerachse 11 jedes Drehteils 8 wird mittels eines Lagerstiftes 12 gebildet, der an seinen beiden Enden durch zwei Winkelprofile 13 gehalten wird, die an der Stützbacke 3 mittels Schrauben 14 angeschraubt sind. Aus der Dartsellung in Fig. 3 ist ersichtlich, daß die beiden Winkelprofile 13 das Drehteil 8 führen, wenn es mittels eines Griffes 15 in Richtung des Doppelpfeils 16 um seine Lagerachse 11 gedreht wird. Jedes Drehteil 8 ist weiterhin mit einer Abflachung 17 versehen, die bei seiner Drehung um die Lagerachse 11 die Linienberührung 10 mit der Spannback 2 durch eine Flächenberührung ersetzt, was in Fig. 2 mit der gestrichelt dargestellten Drehlage des Drehteils 8 veranschaulicht ist. Bei der Flächenberührung der Spannbacke 2 mit der Abflachung 17 des Drehteils 8 jeder Knebelgriffanordnung 9 ist die Spannbacke 2 in ihre bezüglich der Spannbacke 1 maßgebliche Einspannstellung verstellt.

An der starr befestigten Spannbacke 1 sind zwei als Stromleiter vorgesehene Kupferschienen 18 unter Zwischenfügung eines Isoliermaterials 19 mittels Schrauben 20 angeschraubt. Die Kupferschienen 18, die alternativ auch an der verstellbaren Spannbacke 2 befestigt sein können, bilden eine für die Spannbacke 1 maßgebliche Klemmfläche 1', welcher somit eine mit der Spannbacke 2 gebildete Klemmfläche 2' gegenüber liegt. Aus Fig. 1 ist ersichtlich, daß diese Klemmflächen 1', 2' eine senkrecht zu der mit dem Doppelpfeil 6 verdeutlichten Verstellrichtung der beiden Spannbacken 1, 2 über deren gesamte Einspannlänge gleichmäßig verlaufende, komplementär ausgebildete Krümmung aufweisen. Bei einer mit den Spannbacken 1, 2 beispielsweise zur Verfügung gestellten Einspannlänge von 3.30 m ist diese Krümmung der Klemmflächen 1', 2' und damit auch die übereinstimmende Krümmung der beiden Spannbacken 1, 2 und der Stützbacke 3 derart bemessen, daß bei der Anordnung einer durch die Stützkonsole 4 abgestützten Zielfläche der vorerwähnten Abmessungen von etwa 1.80 m×2.30 m und einer Dicke von etwa 9 mm die beiden Hochkanten der Zielfläche eine Auslenkung von etwa 12 cm in bezug auf die erhabene Mitte der Krümmungen erhalten. Eine zwischen den Klemmflächen 1', 2' längs eines längeren Randes eingespannte Zielfläche der vorerwähnten Abmessungen wird damit derart zu ihren freien Randbereichen hin verspannt, daß ihre Hauptfläche eine vergleichmäßigte Anordnung senkrecht zu der Beschußrichtung erfährt, wenn die Beschußrichtung ebenfalls in Richtung des Doppelpfeils 6 ausgerichtet wird. Die längs der gekrümmten Klemmflächen 1', 2' randseitig wirksamen, mit den einzelnen Knebelgriffanordnungen 9 erhaltenen Einspannkräfte werden somit hin zu den freien Randbereichen der eingespannten Zielfläche abgeleitet und bewirken eine Aufhebung der aufgegebenen Krümmung, wodurch die Zielfläche gleichzeitig unter eine so große Eigenspannung versetzt wird, daß für eine für den Beschuß stabile Anordnung bspw. einer Sperrholz platte als Trägermaterial einer zur Erzeugung eines thermischen Scheinzieles als Heizvorrichtung vorgesehenen Metallschicht auf ein besonderes Aussteifungsgerüst verzichtet werden kann.

In der die gesamte Zieleinrichtung ziegenden Schemadarstellung der Fig. 4 ist die vorbeschriebene Spannvorrichtung insgesamt mit 21 bezeichnet und sowohl mit einer Draufsicht als auch mit einer Seitenansicht unter gleichzeitiger Darstellung einer damit festgehaltenen Zielfläche 22 gezeigt. Die Zielfläche ist mit einer Sperrholzplatte 23 als Trägermaterial für eine Aluminiumfolie 24 gebildet, die unter Ausbildung eines Luftspaltes 25 an einem randseitigen Überschlag auf beide Oberflächen der Sperrholzplatte 23 auflaminiert ist. Die Aluminiumfolie 24 hat eine Dicke zwischen etwa 20 und 60 µm in Abhängigkeit von der mit der Zielfläche 22 durch eine Wärmestrahlung zu vermittelnden Größe eines thermischen Scheinzieles, das in der Beschußrichtung der Zielfläche entsprechend dem Pfeil 26 für die Dauer einer Beschußfolge mit einer gegenüber der Umgebungstemperatur um wenigstens 1°C höheren Temperatur erfaßbar sein muß. Die Aluminiumfolie 24 ist auf der Beschußseite der Zielfläche 22 durch eine bis zu der Sperrholzplatte 23 reichende Ritzung 27 in zwei stromleitende Teilflächen unterteilt, die an dem durch die beiden Spannbacken der Spannvorrichtung 21 eingespannten Randbereich eine Kontaktierung durch die beiden an der einen Spannbacke 1 oder 2 als Stromleiter befestigten Kupferschienen 18 erfahren. An die Kupferschienen 18 ist ein Transformator 28 oder ein anderer Spannungsregler angeschlossen, mit dem eine Netzspannung auf etwa 1 Volt bei den kleineren Zielflächen und von etwa 6 Volt bei den größeren bis größten Zielflächen abwärts transformiert wird. Der Transformator 28 sollte für die Erwärmung der Aluminiumfolie 24, optimal durch eine Vergleichsschaltung 29 gesteuert sein, die mit einem ersten Wärmefühler 30 zur Erfassung eines jeweiligen Ist-Wertes der beschußseitigen Oberflächentemperatur der Aluminiumfolie 24 und einem einen Soll-Wert für die Umgebungstemperatur liefernden zweiten Wärmefühler 31 gebildet ist. Die mit diesen beiden Wärmefühlern 30, 31 gebildete Vergleichsschaltung 29, nimmt somit für die Wärmestrahlung der Zielfläche 22 einen ständigen Soll-Ist-Wertvergleich und schaltet in Abhängigkeit davon den Transformator 28 für die Lieferung oder Unterbrechung der abwärts transformierten Lieferspannung für die Aluminiumfolie 24 ein oder aus, Die Vergleichsschaltung kann auch eine Eingliederung in eine Regelsteuerung aufweisen, mit welcher der Heizkreis für die Aluminiumfolie 24 beispielsweise pulsierend mit jeweils einer zwischen zwei Einschaltzeiten zwischengeschalteten Ruhezeit geregelt wird.

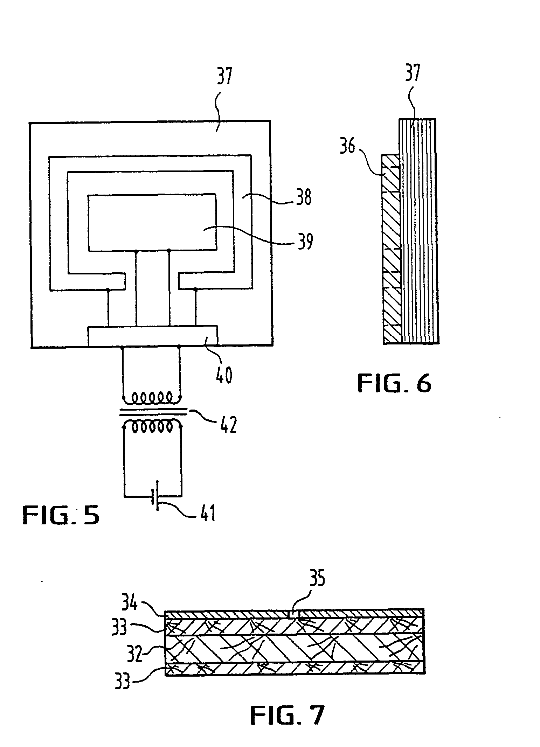

Für eine Untersuchung ihrer praktischen Verwendbarkeit für Infrarot-Schießübungen wurden Zielflächen bereit gestellt, die für die Vermittlung des thermischen Scheinziels eines Panzers entsprechend der Zielfläche 22 jeweils mit einer Sperrholzplatte der Abmessungen 1.80 m×2.30 m und einer beidseits auflaminierten Aluminiumfolie 24 hergestellt worden waren. Weitere dabei untersuchte Zielflächen waren mit einer Schichtstoffplatte gleicher Abmessungen hergestellt, die nach der Schnittdarstellung in Fig. 7 mit einer Kernschicht 32 aus Kiefernholz und zwei beidseitig auflaminierten Furnierschichten 33 aus Fichtenholz nach dem für solche Schichtstoffplatten herkömmlichen Fertigungsprinzip hergestellt und dabei nur an einer Oberseite mit einer noch auflaminierten Aluminiumfolie 34 versehen worden waren, die bei jeder Zielfläche durch eine bis zu der darunter angeordneten Furnierschicht 33 reichende Ritzung 35 ebenfalls in zwei stromleitende Teilflächen unterteilt war. Die Zielflächen hatten übereinstimmend eine Gesamtdicke von 9 mm und wurden mit einer Einspannung in einer Spannvorrichtung der Ausbildung gemäß den Figuren 1 bis 3 mit einer abwärts transformierten Spannung von etwa 6 Volt aus dem Transformator 28 versorgt, wobei die für die Kontaktierung der beiden Teilflächen der Aluminiumfolie 22 bzw. 34 als Stromleiter vorgesehenen Kupferschienen 18 der Spannvorrichtung elektrisch entweder parallel oder hintereinander geschlatet wurden. Die Zielflächen wurden bei einer mittleren Umgebungstemperatur von 18°C beschossen und dafür anfänglich auf eine mit dem Wärmefühler 30 gemessene Temperatur der Aluminiumfolie von etwa 28 bis 30°C aufgeheizt, wozu die Lieferspannung aus dem Transformator 28 erstmals etwa 25 sek zugeführt werden mußte. Das damit durch eine Wärmestrahlung erhaltene thermischen Scheinziel wurde dann mittels der Vergleichsschaltung 29 pulsierend derart geregelt, daß die Lieferspannung mit wechselnden Einschaltzeiten des Transformators 28 von jeweils wenigstens 20 sek bis maximal etwa 40 sek immer dann wieder zugeführt wurde, wenn nach dem Beschuß der Zielflächen deren mit dem Fühler 30 erfaßte Temperatur einen Wert von etwa 24°C erreichte. Mit diesen Daten konnte für die Aluminiumfolie eine Stromaufnahme mit einem Mittelwert von 38 Ampère gemessen werden, was einen mittleren Stromverbrauch von 126 Watt/m² ergab. Alle Zielflächen konnten dabei bis zum Erreichen von 40 Durchschüssen mit einem Durchmesser von jeweils etwa 120 mm ohne eine nennenswerte Beeinträchtigung des durch ihre Wärmestrahlung vermittelten thermischen Scheinzieles beschossen werden, dessen Konturen für einzelne Beschußfolgen noch durch Abdeckungen verändert wurde, welche die Wärmestrahlung der Aluminiumfolie in dafür ausgewählten Teilbereichen so weit verringerten, daß die abgedeckten Teilbereiche mit den Nachtsicht-Visieren nicht mehr erfaßt werden konnten.

In den Figuren 5 und 6 ist schließlich noch für eine alternative Ausführungsform der Zielflächen schematisch dargestellt, daß die Heizvorrichtung auch mit einer Metallschicht 36 ausgebildet werden kann, die nach Art einer gedruckten Schaltung auf ein dafür bevorzugt mit einer sogenannten geschäfteten Sperrholzplatte zur Verfügung gestelltes plattenförmiges Trägermaterial 37 aufgebracht und ebenfalls mit wenigstens zwei stromleitenden Teilflächen 38 und 39 unterteilt wird. Diese insbesondere für kleinere Zielflächen wegen der Möglichkeit einer präziseren Vorgabe von gewünschten Trefferzielen vorteilhafte Ausbildung der Heizvorrichtung läßt dabei auch gleichzeitig eine randseitig vorgesehene Stromschiene 40 integrieren, an welche mit einer Stromquelle 41 verbundene Stromschienen anlegbar sind, wobei mit einem Transformator 42 eine abwärts transformierte Lieferspannung bereit gestellt wird.

Besonders für solche Kleineren Zielflächen ist es dabei alternativ auch möglich, die Lieferspannung mit einer an den elektrischen Heizkreis angeschlossenen Batterie bereit zu stellen, womit dann auf die Verwendung eines besonderen Transformators verzichtet werden kann.

## Patentansprüche

1. Zieleinrichtung für Infrarot-Schießübungen, die mit eine Wärmestrahlung vermittelnden Zielflächen (22) gebildet ist, welche jeweils eine auf einem plattenförmigen Trägermaterial (23; 32, 33; 37) angeordnete Heizvorrichtung aus einem sich bei einem Stromdurchfluß erwärmenden und dafür an einen elektrischen Heizkreis anschließbaren Widerstandsmaterial (24; 34; 36) aufweisen und welche für ein auswechselbares Festhalten durch eine mit zwei gegeneinander verstellbaren Spannbacken (1, 2) gebildete Spannvorrichtung (21) der Zieleinrichtung vorgesehen sind, dadurch gekennzeichnet, daß die Heizvorrichtung jeder Zielfläche (22) aus einer auf das Trägermaterial (23; 32, 33; 37) aufgebrachten dünnen Metallschicht (24; 34; 36) besteht, die in wenigstens zwei elektrisch parallel oder hintereinander geschaltete Teilflächen (38, 39) unterteilt ist, welche für eine gemeinsame Erwärmung an den Spannbacken (1, 2) der Spannvorrichtung (21) mit zwei Stromschienen (18) des elektrischen Heizkreises kontaktierbar sind, dessen Lieferspannung eine mittels eines Transformators (28; 42) abwärts transformierte Netzspannung oder eine Batteriespannung ist.

2. Zieleinrichtung nach Anspruch 1, dadurch gekennzeichnet, daß die Metallschicht durch eine auf das Trägermaterial (23; 32, 33) auflaminierte, in die beiden Teilflächen unterteilte Aluminiumfolie (24; 34) gebildet ist.

3. Zieleinrichtung nach Anspruch 2, dadurch gekennzeichnet, daß die Aluminiumfolie (24) unter Vorgabe eines randseitigen Überschlages auf beide Oberflächen des Trägermaterials (23) auflaminiert ist.

4. Zieleinrichtung nach Anspruch 1, dadurch gekennzeichnet, daß die Metallschicht (36) auf das Trägermaterial (37) nach Art einer gedruckten Schaltung aufgebracht und mit den beiden Teilflächen (38, 39) ausgebildet ist.

5. Zieleinrichtung nach einem der Ansprüche 1 bis 4, dadurch gekennzeichnet, daß der elektrische Heizkreis durch eine Vergleichsschaltung (29) geregelt ist, die mit einem zur Erfassung der Temperatur der Metallschicht (24; 34; 36) angeordneten ersten Wärmefühler (30) und mit einem zur Erfassung der Umgebungstemperatur angeordneten zweiten Wärmefühler (31) gebildet ist.

6. Zieleinrichtung nach Anspruch 5, dadurch gekennzeichnet, daß mit der Vergleichsschaltung (29) eine Regelschaltung zusammengeschaltet ist, welche den elektrischen Heizkreis pulsierend mit jeweils einer zwischen zwei Einschaltzeiten zwischengeschalteten Ruhezeit regelt.

7. Zieleinrichtung nach Anspruch 1, dadurch gekennzeichnet, daß die beiden Spannbacken (1, 2) der Spannvorrichtung (21) mit Klemmflächen (1', 2') versehen sind, die senkrecht zu ihrer Verstellrichtung komplementär ausgebildete, gleichmäßig über die nur für einen Randbereich der Zielflächen (22) vorgesehene gesamte Einspannlänge verlaufende Krümmungen aufweisen.

8. Zieleinrichtung nach Anspruch 7, dadurch gekennzeichnet, daß die beiden Spannbacken (1, 2) der Spannvorrichtung (21) mittels einer an einer gemeinsamen Stützkonsole (4) gelagerten Mehrfach-Knebelgriffanordnung (9) gegeneinander verstellbar sind.

9. Zieleinrichtung nach Anspruch 8, dadurch gekennzeichnet, daß jede Knebelgriffanordnung (9) mit einem an der Stützkonsole (4) exzentrisch gelagerten Drehteil (8) gebildet ist, das in einer Spreizstellung der beiden Spannbacken (1, 2) eine Linienberührung (10) und in deren Einspannstellung eine mit einer Abflachung (17) erhaltene Flächenberührung mit einer der beiden Spannbacken (1, 2) aufweist.

10. Zieleinrichtung nach Anspruch 8 oder 9, dadurch gekennzeichnet, daß die Stützkonsole (4) eine zu den beiden Spannbacken (1, 2) parallel angeordnete Stützbacke (3) aufweist, an welcher die eine Spannbacke (2) für die Vorgabe einer gegenüber der zweiten Spannbacke (1) vorgespannten Spreizstellung durch Blattfedern (7) beweglich abgestützt ist.

## Revendications

1. Dispositif viseur pour les exercices de tir à l'infrarouge, equipé des surfaces de cible (22) qui fournissent un rayonnement thermique et dont chacune comprend un dispositif de chauffage disposé sur un support à plaques (23; 32, 33; 37) et constitué par un matériau à résistance (24; 34; 36) qui se chauffe par la circulation de courant et se peut raccorder à cette fin à un circuit de chauffage électrique, lesdites surfaces de cible étant pourvues pour un maintien interchangeable du dispositif viseur au moyen d'un dispositif de serrage (21) constitué par des mâchoires (1, 2) ajustables les unes relativement aux autres, caractérisé en ce que ledit dispositif de chauffage de chaque surface de cible (22) est constitué par une couche métallique (24; 34; 36) mince épandue sur ledit support (23; 32, 33; 37), qui est divisée en au moins deux surfaces partielles (38, 39) mises en parallèle ou en série qui se peuvent contacter aux deux rails conducteurs (18) du circuit électrique de chauffage pour le chauffage commun auxdites mâchoires (1, 2) dudit dispositif de serrage (21), la tension d'alimentation dudit circuit de chauffage correspondant à la tension de réseau transformée vers le bas au moyen d'un transformateur (28; 42) ou une tension de batterie.

2. Dispositif viseur selon la Revendication 1, caractérisé en ce que ladite couche métallique est constituée par une feuille d'aluminium (24; 34) stratifiée sur ledit support (23; 32, 33) et divisée en lesdites surfaces partielles.

3. Dispositif viseur selon la Revendication 2, caractérisé en ce que ladite feuille d'aluminium (24) est stratifiée sur les deux surfaces dudit support (23) en allouant un recouvrement aux bords.

4. Dispositif viseur selon la Revendication 1, caractérisé en ce que ladite feuille métallique (36) est si appliquée sur ledit support (37) à la façon d'un circuit imprimé qu'elle soit constituée par lesdites surfaces partielles (38, 39).

5. Dispositif viseur selon quelconque des Revendications 1 à 4, caractérisé en ce que ledit circuit électrique de chauffage est asservis au moyens d'un circuit comparateur (29) constitué par un premier détecteur de chaleur (30) pourvu pour la détection de la température de ladite feuille métallique (24; 34; 36) ainsi que par un deuxième détecteur de chaleur (31) pourvu pour la détection de la température ambiante.

6. Dispositif viseur selon la Revendication 5, caractérisé en ce que le circuit comparateur (29) est interconnecté avec un circuit régulateur qui règle ledit circuit électrique de chauffage, à pulsations à un temps de repos entre respectivement deux temps d'opération.

7. Dispositif viseur selon la Revendication 1, caractérisé en ce que les deux mâchoires (1, 2) dudit dispositif de serrage (21) sont pourvues des surfaces de serrage (1', 2') qui présentent des courbures complémentaires verticales relativement à leur sens d'ajustement qui s'étendent uniformément sur toute la longueur libre entre les mâchoires qui est pourvue seulement pour la zone marginale desdites surfaces de cible (22).

8. Dispositif viseur selon la Revendication 7, caractérisé en ce que lesdites deux mâchoires (1, 2) dudit dispositif de serrage (21) se peuvent ajuster l'une relativement à l'autre au moyen d'un système multiple à vis à poignée (9) supporté à une console d'appui commune (4).

9. Dispositif viseur selon la Revendication 8, caractérisé en ce que chacun desdits systèmes à vis à poignée (9) comprend une partie rotative (8) appuyée excentriquement à ladite console d'appui (4) qui, à une position écartée desdites deux mâchoires (1, 2), présente un contact linéaire (10) pendant qu'il présente, à une position serrée desdites mâchoires, un contact de surface avec une desdites deux mâchoires (1, 2) qui est obtenu dû à un aplatissement.

10. Dispositif viseur selon la Revendication 8 ou 9, caractérisé en ce que ladite console d'appui (4) comprend une mâchoire d'appui (3) disposée en parallèle à une desdites deux mâchoires (1, 2), à laquelle mâchoire s'appuie mobilement l'une desdites deux mâchoires (2) pour la définition d'une position écartée précontrainte relativement à la deuxième (1) desdites deux mâchoires.

## Claims

1. A target system for infrared firing exercises comprising targets (22) supplying a heat radiation and having each a heating device arranged on a plate-shaped carrier material (23; 32, 33; 37) and formed of a resistance material (24; 34; 36) which heats-up when a current is flown therethrough upon its connection to an electric heating circuit, said targets being provided for an interchangeable holding by a clamping device (21) of the target system which is formed of two mutually adjustable clamping jaws (1, 2) characterised in that the heating device of each target (22) comprises a thin metallic layer (24; 34; 36) which is applied on said carrier material (23; 32, 33; 37) and is formed with at least two surface portions (38, 39) as electrically connected in parallel or in series for being commonly heated when contacted on said clamping jaws (1, 2) of said clamping device (21) with two current rails (18) of said electric heating circuit the supply voltage of which is either a network voltage as downwardly transformed by a transformer (28; 42) or a battery voltage.

2. A target system according to claim 1 characterised in that said metallic layer comprises an aluminum foil (24; 34) laminated onto said carrier material (23; 32, 33) and subdivided into said two surface portions (38, 39).

3. A target system according to claim 2 characterised in that said aluminum foil (24) is laminated onto both surfaces of said carrier material (23) with the provision of an edgewise turnover.

4. A target system according to claim 1 characterised in that said metallic layer (36) is applied to said carrier material (37) in the manner of a printed circuit and is formed with said two surface portions (38, 39).

5. A target system according to any of the claims 1 to 4 characterised in that said electric heating circuit is controlled by a comparison circuit (29) which is formed with a first sensor (30) for detecting the temperature of the metallic layer (24; 34, 36) and a second sensor (31) for detecting the surrounding temperature.

6. A target system according to claim 5 characterised in that a control circuit is connected to said comparison circuit (29) for controlling the electric heating circuit in a pulsating manner with each OFF time intermediate two ON times.

7. A target system according to claim 1 characterised in that said two clamping jaws (1, 2) of said clamping device (21) are provided with clamping faces (1', 2') having complementary curvatures uniformly extending along their entire clamping length at a right angle with respect to the direction of their mutual adjustment whereby the entire clamping length is only provided for an edge portion of the targets (22).

8. A target system according to claim 7 characterised in that said two clamping jaws (1, 2) of said clamping device (21) are mutually adjustable by means of a plurality of T-handle-mechanisms (9) that are carried by a common supporting bracket (4).

9. A target system according to claim 8 characterised in that each T-handle mechanism (9) comprises an excentrically supported swivel member (8) on said supporting bracket (4) which in a spread-apart position of the two clamping jaws (1, 2) is provided with a line contact (10) with one of said two clamping jaws (1, 2) and which with a flattening (17) has a planar contact in the clamping position of the two clamping jaws (1, 2).

10. A target system according to claim 8 or 9 characterised in that the supporting bracket (4) has a supporting jaw (3) extending in parallel to said two clamping jaws (1, 2) and on which the one clamping jaw (2) is movably supported by means of leaf springs (7) so as to obtain a biased spread-apart position relative to the second clamping jaw (1).

FIG. 3

FIG. 1

FIG. 2

FIG. 4

EP 0 185 877 B1

FIG. 5

FIG. 6

FIG. 7